# EUROPÄISCHE PATENTSCHRIFT

(11) **EP 3 102 402 B1**
(45) Veröffentlichungstag und Bekanntmachung des Hinweises auf die Patenterteilung: **07.02.2018**
(21) Anmeldenummer: 15701225.3
(22) Anmeldetag: 27.01.2015
(51) Int. Cl.: B29L 31/18, B29C 45/14, B29C 65/02, H01M 2/10, H01M 10/60, H01M 10/647, H01M 10/6557

(54) **VERFAHREN ZUM HERSTELLEN EINES PLATTENFÖRMIGEN WÄRMETAUSCHERS, PLATTENFÖRMIGER WÄRMETAUSCHER UND VERBUND MIT PLATTENFÖRMIGEN WÄRMETAUSCHERN**
METHOD FOR PRODUCING A PLATE-SHAPED HEAT EXCHANGER, PLATE-SHAPED HEAT EXCHANGER AND ASSEMBLAGE OF PLATE-SHAPED HEAT EXCHANGERS
PROCÉDÉ DE FABRICATION UNE ECHANGEUR THERMIQUE EN PLATE-FORME, ECHANGEUR THERMIQUE EN PLATE-FORME ET ASSEMBLAGE DES ECHANGEURS THERMIQUES EN PLATE-FORME

(30) Priorität: 04.02.2014 DE 102014101358
(43) Veröffentlichungstag der Anmeldung: 14.12.2016
(73) Patentinhaber: Dr. Schneider Kunststoffwerke GmbH, 96317 Kronach (DE)
(72) Erfinder: HÜTTEL, Bernd, 95119 Naila (DE)
(86) Internationale Anmeldenummer: PCT/EP2015/051605
(87) Internationale Veröffentlichungsnummer: WO 2015/117865

(56) Entgegenhaltungen:
- EP-A1- 1 630 896
- WO-A1-2013/037742
- DE-A1-102009 016 576
- DE-A1-102010 021 922
- DE-A1-102010 051 106
- US-A1- 2006 021 745
- US-A1- 2013 171 493

## Beschreibung

Die vorliegende Erfindung betrifft ein Verfahren zum Herstellen eines plattenförmigen Wärmetauschers, einen plattenförmigen Wärmetauscher sowie einen Verbund mit plattenförmigen Wärmetauschern.

Plattenförmige Wärmetauscher werden insbesondere bei Hochleistungsbatterien dazu verwendet, um die ebenfalls plattenförmigen Akkuzellen zu kühlen. Ein derartiger Verbund ("Stack") weist in der Regel eine Vielzahl von Akkuzellen auf, die elektrisch miteinander in Verbindung stehen. Zwischen diesen Akkuzellen sind die plattenförmigen Wärmetauscher angeordnet, die ebenfalls beispielsweise über einen Fluidkreislauf miteinander verbunden sind.

DE 10 2011 053 439 A1 offenbart ein Temperiermodul für eine Energiespeichereinrichtung, ein Stapelmodul für eine Energiespeichereinrichtung oder für eine elektrische Maschine sowie eine Energiespeichereinrichtung. Der Temperierkörper weist eine erste Wandplatte und eine zweite gegenüberliegende Wandplatte auf. Zwischen den Wandplatten ist eine Kanalplatte angeordnet, in der sich ein Kanal erstreckt, welcher von einer Flüssigkeit zum Kühlen durchflossen werden kann. Die Wandplatten des Temperierkörpers können mit einer wärmeleitenden Schicht überzogen werden. Die Anschlüsse zur Zu- und Abfuhr der Flüssigkeit sind so angeordnet, dass diese aus einem Stapel mit mehreren solchen Temperierkörpern aus dem Stapel hervorstehen. Die Anschlüsse können dann über eine Leitung mit einer Kühlflüssigkeit versorgt werden.

DE 10 2010 055 389 A1 offenbart eine Kühlplatte für eine Lithiumionenbatteriepackung, wobei die Kühlplatten einen Rahmen aufweisen, in welchem sie gehalten werden und über den die Zu- und Abfuhr einer Kühlflüssigkeit erfolgt. Dazu weist der Rahmen nach außen ragende Vorsprünge auf. Die nach außen ragenden Vorsprünge zur Flüssigkeitszu- und -abfuhr können mit weiteren Kühlplatten und Rahmen dieser verbunden werden, um eine gemeinsame Flüssigkeitszu- und -abfuhr bereitzustellen. Jedoch vergrößern diese Vorsprünge den für einen Stapel, umfassend eine Vielzahl solcher Kühlplatten, erforderlichen Platzbedarf. Ferner müssen diese Vorsprünge mit den Flüssigkeitsöffnungen abgedichtet werden. Auf Grund der Ausgestaltung der Rahmen kann eine Abdichtung nur durch Mittel erreicht werden, welche wiederum einen erhöhten Platzbedarf erfordern.

DE 10 2009 016 576 A1 offenbart ein Verfahren zur Herstellung und zum Zusammenbau von Batterien und deren Komponenten sowie eine Batterie und deren Komponenten, wobei eine Vielzahl von Batteriekühlplatten vorgesehen wird, die jeweils einen darin definierten Pfad für flüssiges Kühlmittel aufweisen, der mit einem Einlasssammelleitungsloch und einem Auslasssammelleitungsloch kommuniziert, und eine Vielzahl von Kühlplatten aneinandergestapelt wird, so dass die Einlass- und Auslasssammelleitungslöcher jeder Platte mit denselben von benachbarten Platten und jedem der Einlass- und Auslasssammelleitungslöcher von benachbarten ausgerichtet sind.

US 2012/0040222 A1 offenbart einen Rahmen mit einer gewellten Kühlplatte für eine luftgekühlte Batterie, wobei auf beiden Seiten der gewellten Kühlplatte eine ebene weitere Kühlplatte angeordnet ist und die weiteren Kühlplatten an ihren Rändern eine nach außen vorstehende Rippe aufweisen, wobei ein Rahmen einen Rand der weiteren Kühlplatten umgibt, wobei der Rahmen die Ränder der weiteren Kühlplatten abdichtet.

DE 10 2010 021 922 A1 offenbart ein Kühlelement, das zur Anordnung zwischen elektrochemischen Energiespeicherzellen ausgelegt und eingerichtet ist, wobei das Kühlelement eine von einem Wärmeträgermedium durchströmbare Wärmetauscherstruktur aufweist, die aus zwei Folienschichten oder Folienschichtstrukturen ausgebildet ist, die mit gegenüberliegenden Flächen aneinandergelegt und an innerhalb der Flächen ausgebildeten Nahtstellen verbunden sind, wobei die Nahtstellen Hohlräume zwischen den Flächen begrenzen, durch welche das Wärmeträgermediums leitbar ist.

Aufgabe der vorliegenden Erfindung ist es daher, ein Verfahren zum Herstellen eines plattenförmigen Wärmetauschers, einen plattenförmigen Wärmetauscher sowie einen Verbund, aufweisend eine Vielzahl von plattenförmigen Wärmetauschern, anzugeben, wobei die plattenförmigen Wärmetauscher einfach und schnell herzustellen sind sowie untereinander derart verbindbar bzw. anordenbar sind, dass ein Verbund aus Wärmetauschern und Wandler- oder Akkumulatorenzellen bereitgestellt wird, der eine einfache Zuführung und Abführung einer Kühlflüssigkeit sowie einen platzsparenden Aufbau aufweist.

Erfindungsgemäß wird die Aufgabe durch ein Verfahren gemäß Anspruch 1, einen plattenförmigen Wärmetauscher gemäß Anspruch 5 und einen Verbund gemäß Anspruch 11 gelöst. Vorteilhafte Weiterbildungen der Erfindung sind in den Unteransprüchen im Detail angegeben.

Das erfindungsgemäße Verfahren zur Herstellung eines plattenförmigen Wärmetauschers für Akkumulatoren oder Wandler zur Stromerzeugung umfasst die folgenden Schritte:
- Umspritzen eines ersten profilierten Wärmeleitelements an dessen äußerem Umfang mit einem Kunststoff zur Bildung eines ersten Rahmenteils, unter Bildung zweier Versorgungskanalhälften, von denen aus sich Mulden zu dem profilierten Wärmeelement erstrecken, und jeweils eines Anschlusses für jede Versorgungskanalhälfte,
- Umspritzen eines zweiten profilierten Wärmeleiteelements an dessen äußerem Umfang mit einem Kunststoff zur Bildung eines zweiten Rahmenteils, unter Bildung zweier Versorgungskanalhälften, von denen aus sich Mulden zu dem profilierten Wärmeleitelement erstrecken, und jeweils eines Anschlusses für jede Versorgungskanalhälfte,
- Verbinden des ersten Rahmenteils mit dem zweiten Rahmenteil, wobei das erste Rahmenteil derart mit dem zweiten Rahmenteil in Verbindung gebracht wird, dass die Profile der profilierten Wärmeleitelemente einander zugewandt aneinander anliegen und die Versorgungskanalhälften des ersten und des zweiten Rahmenteils Versorgungskanäle und die Mulden Öffnungen von den Versorgungskanälen zu den durch die Profile der profilierten Wärmeleitelemente gebildeten Kanäle bilden,
wobei die Anschlüsse des ersten und des zweiten Rahmenteils so ausgebildet werden, dass die Anschlüsse des ersten Rahmenteils des Wärmetauschers mit den Anschlüssen des zweiten Rahmenteils eines weiteren Wärmetauschers verbunden werden können.

Das Verfahren ermöglicht eine einfache und schnelle Herstellung eines plattenförmigen Wärmetauschers, wobei für einen plattenförmigen Wärmetauscher zwei Rahmenteile, erstes Rahmenteil und zweites Rahmenteil, gefertigt werden.

Im Gegensatz zum Stand der Technik werden bei diesem Herstellungsverfahren die beiden für den plattenförmigen Wärmetauscher benötigten Komponenten schnell und einfach hergestellt, wobei keine weiteren Bestandteile mehr benötigt werden. Bekannte plattenförmige Kühlelemente aus dem Stand der Technik erfordern mehrere Bearbeitungsschritte zur Herstellung der dafür erforderlichen Komponenten. Das erfindungsgemäße Verfahren zeichnet sich dadurch aus, dass ein Wärmeleitelement umspritzt wird, wobei zwei daraus gebildete Rahmenteile nur noch miteinander verbunden werden müssen.

Bei dem Verfahren wird der Kunststoff so an das erste und das zweite Wärmeleitelement angefügt und die Mulden werden so ausgebildet, dass die durch die Mulden gebildeten Halbkanäle oder halbkreisförmigen Öffnungen deckungsgleich an den durch das Profil des ersten und des zweiten Wärmeleitelements gebildeten Halbkanälen anliegen.

Das Verbinden des Kunststoffs des ersten Rahmenteils mit dem Kunststoff des zweiten Rahmenteils kann über ein Kunststofffügeverfahren, z.B. Laserschweißen, Vibrationsschweißen, Spiegelschweißen, Infrarotstrahlungsschweißen oder Ultraschallschweißen, erfolgen. Hierzu wird großflächig zumindest auf dem Kunststoff Wärme eingebracht, welche ein Verschmelzen des Kunststoffs in den aneinanderliegenden Bereichen des ersten Rahmenteils und des zweiten Rahmenteils bewirkt.

Das Verbinden der profilierten Wärmeleitelemente kann mittels Heißprägen erfolgen. Dies bietet sich vor allem bei der Verwendung von mit Schmelzklebstoff beschichteten metallenen Wärmeleitelementen an.

Das Fügen der profilierten Rahmen sowie das Verkleben der profilierten Wärmeleitelemente können mittels kombinierter Fügeverfahren, wie z.B. Infrarotstrahlungsschweißen und Heißprägen, in einem Prozessschritt erfolgen.

Das Verschweißen kann dabei mittels Heizplatten erfolgen, wobei hierzu ein gesondertes Verbinden des Kunststoffs des ersten Rahmenteils und des zweiten Rahmenteils nicht zwingend erforderlich ist. Heizplatten können auf die Wärmeleitelemente des ersten und des zweiten Rahmenteils aufgebracht werden und die zum Heißkleben des Wärmeleitelementes des ersten Rahmenteils sowie des Wärmeleitelements des zweiten Rahmenteils eingebrachte Wärme kann zusätzlich ein Verschweißen bzw. Verbinden des Kunststoffs des ersten Rahmenteils mit dem Kunststoff des zweiten Rahmenteils bewirken. Dadurch erfolgt auch das Verbinden des ersten Rahmenteils mit dem zweiten Rahmenteil zur Herstellung eines plattenförmigen Wärmetauschers einfach und schnell in einem einfachen Bearbeitungsschritt. Dies wirkt sich insbesondere auch auf die Kosten zur Herstellung derartiger plattenförmiger Wärmetauscher aus. Ferner werden für die erfindungsgemäßen plattenförmigen Wärmetauscher nicht mehrere Bestandteile benötigt. Es werden lediglich das erste Rahmenteil und das zweite Rahmenteil miteinander verbunden, wobei diese jeweils durch Umspritzen eines Wärmeleitelements mit Kunststoff gebildet werden.

Ein erfindungsgemäßer plattenförmiger Wärmetauscher für Akkumulatoren oder Wandler zur Stromerzeugung besteht aus zwei miteinander verbundenen Rahmenteilen aus Kunststoff, welche umlaufend jeweils ein profiliertes Wärmeleitelement umgeben und welche an dem äußeren Umfang der profilierten Wärmeleitelemente mit den profilierten Wärmeleitelementen verbunden sind. Die Profile der profilierten Wärmeleitelemente bilden im verbundenen Zustand der Rahmenteile Kanäle aus, durch welche ein Fluid führbar ist. Die Rahmenteile bilden im verbundenen Zustand mindestens zwei Versorgungskanäle für die Fluidzu- und/oder -abfuhr, von denen aus sich Öffnungen zu den Kanälen der profilierten Wärmeleitelemente erstrecken, wobei die Rahmenteile für jeden Versorgungskanal jeweils mindestens einen Anschluss zur Fluidzu- und/oder -abfuhr aufweisen, der mit einem Anschluss eines Rahmenteils eines weiteren Wärmetauschers verbindbar ist. Die Anschlüsse der Rahmenteile eines Wärmetauschers sind so ausgebildet, dass die Anschlüsse eines ersten Rahmenteils eines Wärmetauschers mit den Anschlüssen eines zweiten Rahmenteils des weiteren Wärmetauschers verbindbar sind.

Der plattenförmige Wärmetauscher weist einen einfachen Aufbau auf, wobei die Kanäle sowie Versorgungskanäle zum Zu- und Abführen des Fluids einfach in dem plattenförmigen Wärmetauscher ausgebildet sind, da diese durch sogenannte Halbkanäle gebildet werden. Der plattenförmige Wärmetauscher kann mit weiteren plattenförmigen Wärmetauschern über die Anschlüsse verbunden werden, wobei diese entsprechend ausgebildet sind. Der Anschluss eines ersten Rahmenteils kann im Weiteren hierzu in den Anschluss eines zweiten Rahmenteils einsetzbar sein. Ferner kann der Anschluss des ersten Rahmenteils eine Einkerbung aufweisen, welche von einem Dichtungsring umgeben ist. Dadurch wird sichergestellt, dass kein Fluid aus dem Kühlkreislauf heraustritt.

Die Wärmeleitelemente können aus Metall oder Graphit bestehen. Metall bietet den Vorteil, dass die Wärmeleitelemente miteinander verschweißt oder verklebt werden können, wobei die dadurch entstehende Wärme auch ein Verschweißen bzw. Verbinden der Rahmenteile aus Kunststoff bietet. Wärmeleitelemente aus Graphit bieten den Vorteil, dass diese eine höhere Wärmeübertragung sowie chemisch höhere Stabilität (inert) gegenüber bestimmten Metallen aufweisen.

Das erste und das zweite Rahmenteil können so ausgebildet sein, dass eine zwischen zwei plattenförmigen Wärmetauschern angeordnete Wandler- oder Akkumulatorzelle an den Wärmeleitelementen der plattenförmigen Wärmetauscher anliegt. Der plattenförmige Wärmetauscher weist dazu entsprechend seiner späteren Verwendung eine entsprechende Form auf, wobei Wandler- bzw. Akkumulatorenzellen für Hochleistungsbatterien bestimmte Abmaße aufweisen. Das erste oder das zweite Rahmenteil können Auflagestege für elektrische Kontakte der Wandler- oder Akkumulatorzelle aufweisen. Bei einer stapelweisen Anordnung von plattenförmigen Wärmetauschern und Wandler- oder Akkumulatorenzellen werden die elektrischen Kontakte aus diesem Verbund von Zellen und Wärmetauschern herausgeführt und dafür entsprechend an den Auflagestegen abgelegt.

Das erste oder das zweite Rahmenteil können auch mindestens einen Aufnahmezapfen aufweisen. Aufnahmezapfen dienen zum Beispiel als Steckkopplungselemente, um bspw. Akkumulatorzellen über ihre elektrischen Anschlüsse miteinander hierüber zu verbinden zu können oder wahlweise auch abtrennen zu können, falls z.B. eine Akkumulatorzelle unbrauchbar geworden ist. Die Aufnahmezapfen können auch zur Befestigung und/oder Verriegelung von Wärmetauschern bspw. an einer Stapeleinrichtung dienen.

Bei einem erfindungsgemäßen Verbund, aufweisend eine Vielzahl von plattenförmigen Wärmetauschern und Wandler- oder Akkumulatorenzellen, wobei die Wandler- oder Akkumulatorenzellen stapelweise angeordnet sind und zwischen den Wandler- oder Akkumulatorenzellen jeweils ein plattenförmiger Wärmetauscher angeordnet ist, sind die plattenförmigen Wärmetauscher die hierin beschriebenen Wärmetauscher. Die plattenförmigen Wärmetauscher sind in dem Verbund über die Anschlüsse miteinander und mit einer Einrichtung zur Zu- und Abfuhr von Fluid verbunden.

Die Einrichtung kann zur Kühlung und zum Umwälzen des Fluids ausgebildet sein. Derartige Umwälz- und Kühleinrichtungen sind aus dem Stand der Technik bekannt.

Die Wandler- oder Akkumulatorenzellen können über eine Trenneinrichtung elektrisch miteinander verbunden sein. Die Trenneinrichtung kann auch über die plattenförmigen Wärmetauscher mit den Wandler- oder Akkumulatorenzellen verbunden sein.

Vorteilhafterweise ergibt sich über die Ausbildung der Anschlüsse der plattenförmigen Wärmetauscher eine einfache Möglichkeit, diese zu einem Verbund bzw. Stapel ("Stack") zusammenzufügen.

Besonders vorteilhaft ist bei den plattenförmigen Wärmetauschern, dass zwei Rahmenteile gebildet werden, welche jeweils Halbkanäle aufweisen (Halbkanäle werden auch durch die Wärmeleitelemente auf Grund der Profile gebildet), welche anschließend durch das Verbinden bzw. Verschweißen die Kanäle für das Fluid zum Kühlen bereitstellen. Erfindungsgemäß erfolgt dabei die Ausbildung von Kanälen und des Wärmetauschers in einem einzigen Verbindungsschritt. Die Größe der Kanäle (Versorgungskanal etc.) ist in Abhängigkeit der zu kühlenden Wandler- oder Akkumulatorenzellen zu wählen. Ferner trifft dies auch auf die Abmaße der Rahmenteile, der Wärmeleitelemente und des plattenförmigen Wärmetauschers zu. Die Wahl der Werkstoffe (Kunststoff, Metall oder Graphit) ist auch immer in Abhängigkeit des Einsatzgebietes zu treffen. So müssen bei Hochleistungsbatterien oftmals große Wärmemengen abgeführt werden. Aus diesem Grund ist auch ein entsprechendes Fluid für die Kühlung auszuwählen, wobei in einfachen Ausführungsformen eine Luftkühlung erfolgen kann, jedoch in den meisten Anwendungen sich Kühlflüssigkeiten mit entsprechender Eigenschaft zum Wärmeabtransport als bessere Lösung erwiesen haben.

Der Verbund kann um mindestens einen plattenförmigen Wärmetauscher und um mindestens eine Wandler- oder Akkumulatorzelle erweiterbar sein.

In weiteren Ausführungsformen weist der Verbund eine Überwachungseinheit auf, die dazu ausgebildet ist, mindestens eine Zustandsüberwachung und/oder eine Temperaturüberwachung der Wandler- oder Akkumulatorzellen durchzuführen. Eine Zustandsüberwachung umfasst bspw. die Überwachung des Ladezustands der Akkumulatorzellen.

Der Verbund kann ferner eine Trenneinrichtung aufweisen, die in Abhängigkeit der von der Überwachungseinheit ermittelten Zustände mindestens eine Wandler- oder Akkumulatorzelle elektrisch trennt, wenn die Zustände vorgebbare Grenzen überschreiten.

Die Trenneinrichtung kann eine pyrotechnisch arbeitende Einrichtung oder eine elektrisch, magnetisch oder mechanisch arbeitende Einrichtung sein.

Durch einen solchen modular, je nach Anzahl der Wandler- oder Akkumulatorzellen erweiterbaren aufgebauten Verbund, der eine Regelelektronik (Überwachungseinheit: Temperaturüberwachung sowie Zustandsüberwachung der Wandler- oder Akkumulatorzellen) beinhaltet (z.B. über separates modular aufgebautes Elektronikmodul, das auf dem Verbund aufgesetzt ist), wird ein Kontaktiersystem bereitgestellt, welches die Sicherheit erhöht. Wandler- oder Akkumulatorzellen können in kritischen Fällen über die außen wirkende Trenneinrichtung (pyrotechnische Einrichtung, elektrische Hebeeinrichtung, magnetische Hebeeinrichtung, mechanisch vorgespannte Hebeeinrichtung) angehoben werden, so dass die Wandler- oder Akkumulatorzellen voneinander getrennt werden. Sollte ein Durchbrennen einer Zelle erfolgen, was üblicherweise zu einer Kettenreaktion und folglich zur Selbstzerstörung der ganzen Einheit führen würde, trennt die Trenneinrichtung jede Wandler- oder Akkumulatorzellen voneinander ab. Dazu können für jede Wandler- oder Akkumulatorzelle eine separate Überwachungseinheit und eine dazugehörige separate Trenneinrichtung vorgesehen sein.

Weitere Ziele, Merkmale, Vorteile und Anwendungsmöglichkeiten ergeben sich aus der nachfolgenden Beschreibung von nicht einschränkend zu verstehenden Ausführungsbeispielen mit Bezug auf die zugehörigen Zeichnungen. Dabei bilden alle beschriebenen und/oder bildlich dargstellten Merkmale für sich oder in beliebiger Kombination den hier offenbarten Gegenstand, auch unabhängig von ihrer Gruppierung in den Ansprüchen oder deren Rückbeziehungen. Die Abmessungen und Proportionen der in den Figuren gezeigten Komponenten sind hierbei nicht unbedingt maßstäblich. Sie können bei zu implementierenden Ausführungsformen vom Veranschaulichten abweichen.

In den Zeichnungen zeigt:
- Fig. 1: eine perspektivische Ansicht zweier Wärmeleitelemente;
- Fig. 2: eine perspektivische Ansicht zweier Kunststoffrahmen;
- Fig. 3: eine perspektivische Ansicht zweier Kunststoffrahmen mit zwei Wärmeleitelementen;
- Fig. 4: eine perspektivische Ansicht eines plattenförmigen Wärmetauschers;
- Fig. 5: eine weitere perspektivische Ansicht eines plattenförmigen Wärmetauschers;
- Fig. 6: eine Schnittansicht eines plattenförmigen Wärmetauschers;
- Fig. 7: eine teilweise geschnittene Ansicht eines plattenförmigen Wärmetauschers;
- Fig. 8: eine Schnittansicht zweier verbundener plattenförmiger Wärmetauscher;
- Fig. 9: eine Schnittansicht zweier plattenförmiger Wärmetauscher und anliegenden Akkumulatorenzellen;
- Fig.10: eine weitere Ansicht zweier plattenförmiger Wärmetauscher und anliegenden Akkumulatorzellen im Bereich der Kontakte; und
- Fig. 11: eine perspektivische, schematische Ansicht eines Verbunds aus Akkumulatorzellen und plattenförmigen Wärmetauschern.

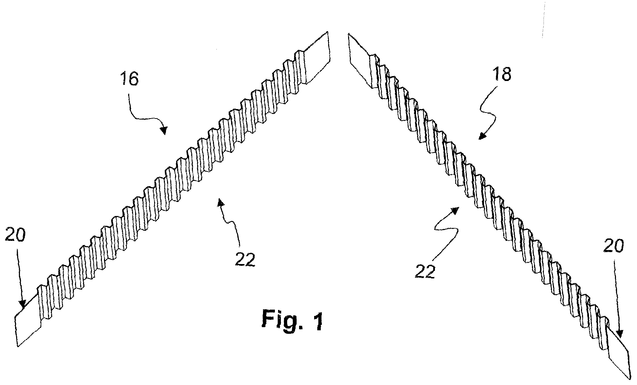

Fig. 1 zeigt eine perspektivische Ansicht zweier Wärmeleitelemente 16 und 18. Das erste Wärmeleitelement 16 und das zweite Wärmeleitelement 18 weisen jeweils ein Profil 22 auf, welches im Wesentlichen in Längsrichtung sogenannte Halbkanäle ausbildet. Diese Halbkanäle des ersten Wärmeleitelements 16 und des zweiten Wärmeleitelements 18 bilden im zusammengefügten Zustand der beiden Wärmeleitelemente 16, 18 Kanäle 46, wie später noch ausführlich angegeben.

Das erste Wärmeleitelement 16 und das zweite Wärmeleitelement 18 bestehen aus einem wärmeleitfähigen Metall. Jedoch können das erste Wärmeleitelement 16 und das zweite Wärmeleitelement 18 auch aus Graphit bestehen, welches eine höhere Wärmeleitfähigkeit als beispielsweise Kupfer aufweist.

An die Umfangskante 20 des ersten Wärmeleitelementes 16 und des zweiten Wärmeleitelementes 18 wird zur Bildung eines ersten Rahmenteils 12 und eines zweiten Rahmenteils 14 ein Kunststoff angespritzt. Dazu werden das erste Wärmeleitelement 16 und das zweite Wärmeleitelement 18 jeweils in eine entsprechende Spritzgussform gelegt und anschließend ein geeigneter Kunststoff an diese angespritzt.

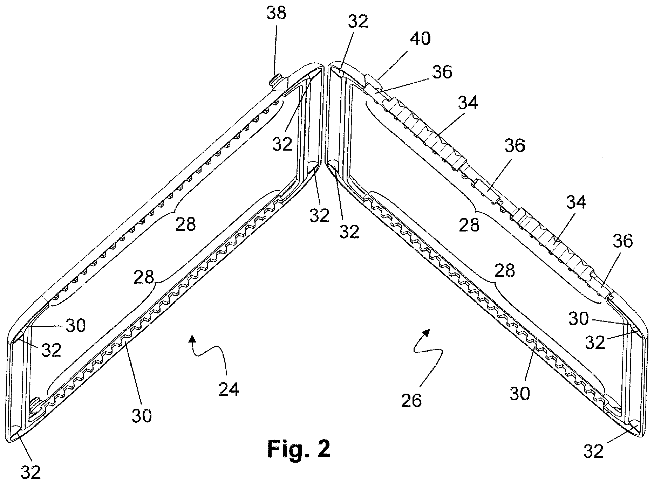

Fig. 2 zeigt eine perspektivische Ansicht zweier Kunststoffrahmen 24 und 26, welche an die Umfangskante 20 des ersten Wärmeleitelementes 16 und des zweiten Wärmeleitelementes 18 an diese angespritzt und daran ausgebildet werden. In Fig. 2 sind der erste Kunststoffrahmen 24 und der zweite Kunststoffrahmen 26 ohne das erste Wärmeleitelement 16 und das zweite Wärmeleitelement 18 dargestellt. Jedoch erfolgt beim Herstellen des ersten Rahmenteils 12 und des zweiten Rahmenteils 14 für einen Wärmetauscher 10 kein gesondertes Herstellen des ersten und zweiten Kunststoffrahmens 24, 26 ohne die Wärmeleitelemente 16 und 18. Wie bereits angegeben, werden der erste Kunststoffrahmen 24 und der zweite Kunststoffrahmen 26 nicht getrennt von den Wärmeleitelementen 16, 18 hergestellt, sondern an diese angespritzt. Jedoch zeigt Fig. 2 den ersten Kunststoffrahmen 24 und den zweiten Kunststoffrahmen 26 getrennt von dem ersten und dem zweiten Wärmeleitelement 16, 18.

Der erste Kunststoffrahmen 24 und der zweite Kunststoffrahmen 26 werden im Wesentlichen identisch ausgebildet, wobei jedoch der zweite Kunststoffrahmen 26 zusätzlich Auflagestege 34 und Aufnahmezapfen 36 aufweist. Auch unterscheiden sich der erste Kunststoffrahmen 24 und der zweite Kunststoffrahmen 26 in den Anschlüssen 38 und 40, wie weiter unten genauer beschrieben. Ansonsten entsprechen der erste Kunststoffrahmen 24 und der zweite Kunststoffrahmen 26 einander, ebenso wie das erste Wärmeleitelement 16 im Wesentlichen genauso ausgebildet ist wie das zweite Wärmeleitelement 18. Die Auflagestege 34 des zweiten Kunststoffrahmens 26 dienen als Auflagefläche für Kontakte 52 von Akkumulatorzellen 50, wobei auf den Auflagestegen 34 die Kontakte 52 derart aufliegen, dass eine leichte Kontaktierung der Akkumulatorzellen 50 möglich ist.

Der erste Kunststoffrahmen 24 und der zweite Kunststoffrahmen 26 weisen Mulden 28 auf. Die Mulden 28 sind so ausgebildet, dass sie im Wesentlichen den durch das Profil 22 des ersten Wärmeleitelementes 16 und des zweiten Wärmeleitelementes 18 gebildeten Halbkanälen entsprechen. Der erste und der zweite Kunststoffrahmen 24, 26 sind ferner so ausgebildet, dass um die Umfangskanten 20 des ersten und zweiten Wärmeleitelements 16, 18 Versorgungskanalhälften 30 gebildet werden. Die Versorgungskanalhälften 30 weisen im Wesentlichen einen U-förmigen oder halbkreisförmigen Querschnitt auf, wobei die einzelnen Versorgungskanalhälften 30 durch Stege 32 begrenzt werden. Der erste und der zweite Kunststoffrahmen 24, 26 sind so ausgebildet, dass der U-förmige bzw. halbkreisförmige Querschnitt über die gesamte Länge (umlaufend) des ersten und zweiten Kunststoffrahmens 24, 26 beibehalten wird. Im zusammengefügten Zustand bilden die Versorgungskanalhälften 30 Versorgungskanäle 44 und die Mulden 28 des ersten und des zweiten Kunststoffrahmens 24, 26 bilden Öffnungen, durch welche ein Fluid von den Versorgungskanälen 44 zu den Kanälen 46, die durch das erste und zweite Wärmeleitelemente 16 und 18 gebildet werden, gelangt. Die Abtrennung über die Stege 32 stellt sicher, dass eine Durchströmung entweder von "oben" nach "unten" oder von "unten" nach "oben" erfolgen kann.

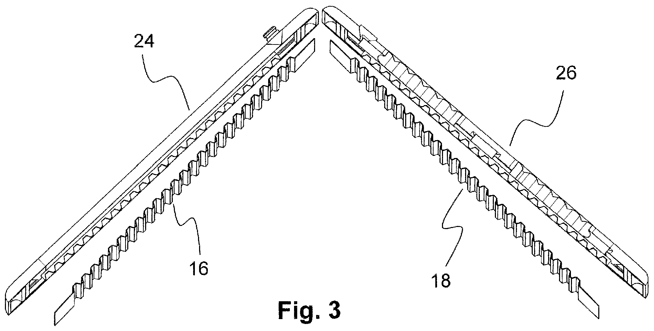

Fig. 3 zeigt eine perspektivische Ansicht zweier Kunststoffrahmen 24, 26 mit zwei Wärmeleitelementen 16, 18. Wie aus Fig. 3 ersichtlich, sind die Mulden 28 entsprechend so angeordnet, dass die Mulden 28 deckungsgleich an den durch das Profil 22 gebildeten Halbkanälen anliegen. Um immer eine Deckung der Mulden 28 zu dem Profil 22 des ersten und zweiten Wärmeleitelementes 16 und 18 bereitzustellen, sind die Spritzgussformen für das erste Rahmenteil 12 und das zweite Rahmenteil 14 so ausgebildet, dass die Deckung gewährleistet wird.

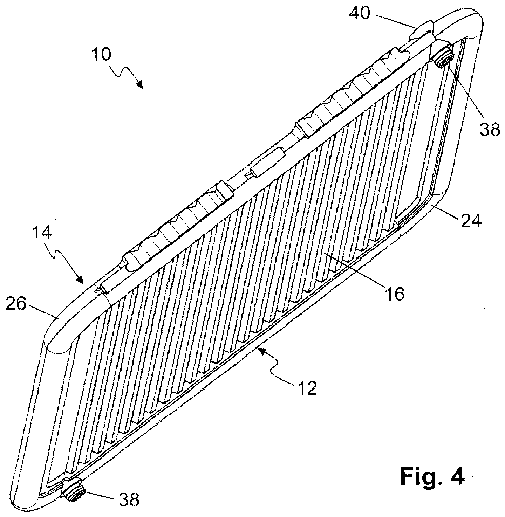

Fig. 4 zeigte eine perspektivische Ansicht eines plattenförmigen Wärmetauschers 10. Das erste Rahmenteil 12 weist ein Wärmeleitelement 16 und einen an das Wärmeleitelement 12 angespritzten, das erste Wärmeleitelement 16 umgebenden Kunststoffrahmen 24 auf. Ferner weist das erste Rahmenteil 12 Anschlüsse 38 auf. Über die Anschlüsse 38 kann das erste Rahmenteil 12 eines Wärmetauschers 10 mit einem zweiten Rahmenteil 14 eines weiteren Wärmetauschers 10 über dessen entsprechend ausgebildete Anschlüsse 40 verbunden werden. Ferner können über die Anschlüsse 38 auch Einrichtungen (in den Figuren nicht dargestellt) zur Zufuhr eines Kühlmittels/Fluids angeschlossen werden.

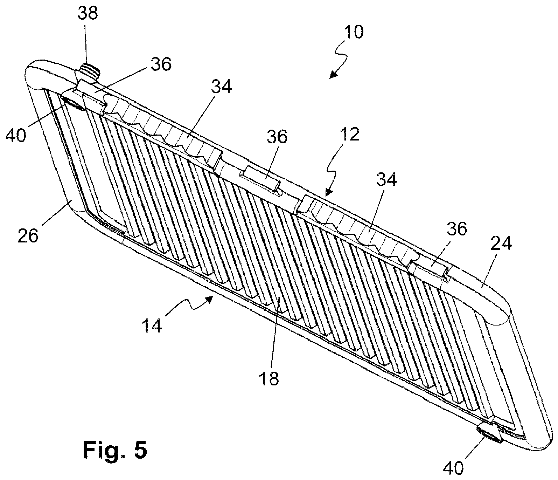

Fig. 5 zeigt eine weitere perspektivische Ansicht eines plattenförmigen Wärmetauschers 10. Das zweite Rahmenteil 14 weist ein zweites Wärmeleitelement 18 sowie einen das zweite Wärmeleitelement 16 umgebenden, an das zweite Wärmeleitelement 18 angespritzten zweiten Kunststoffrahmen 26 auf. Der zweite Kunststoffrahmen 26 weist neben den Auflagestegen 34 und den Aufnahmezapfen 36 Anschlüsse 40 auf, welche so ausgebildet sind, dass die Anschlüsse 38 des ersten Rahmenteils 12 in die Anschlüsse 40 eingesetzt werden können.

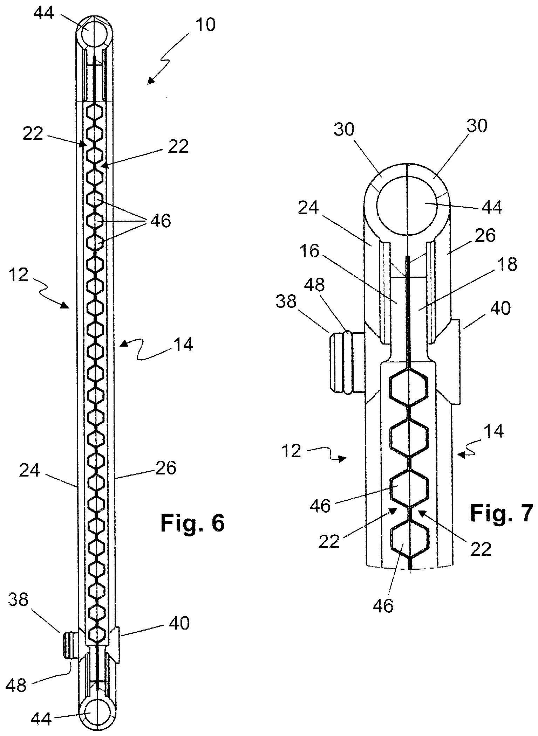

Fig. 6 zeigt eine Schnittansicht eines plattenförmigen Wärmetauschers 10. Der plattenförmige Wärmetauscher 10 weist ein erstes Rahmenteil 12 sowie ein zweites Rahmenteil 14 auf. Das erste Rahmenteil 12 wird durch ein erstes Wärmeleitelement 16 und einen an das erste Wärmeleitelement 16 angespritzten, das erste Wärmeleitelement 16 umgebenden Kunststoffrahmen 24 gebildet. Das zweite Rahmenteil 14 weist ein zweites Wärmeleitelement 18 sowie einen das zweite Wärmeleitelement 18 umgebenden, an das zweite Wärmeleitelement 18 angespritzten zweiten Kunststoffrahmen 26 auf. Das erste und das zweite Rahmenteil 12 und 14 werden durch Verschweißen miteinander verbunden, wobei das Verschweißen im Bereich des ersten und des zweiten Wärmeleitelements 16, 18 erfolgt. Über den Wärmeeintrag werden die Profile 22 des ersten Wärmeleitelements 16 und des zweiten Wärmeleitelements 18 so miteinander verbunden, dass die Halbkanäle der Profile 22 Kanäle 46 ausbilden. Ferner erfolgt über den Wärmeeintrag ein Verschmelzen der Kunststoffe des ersten Kunststoffrahmens 24 und des zweiten Kunststoffrahmens 26. Dadurch werden Versorgungskanäle 44 gebildet, über welche ein Fluid zugeführt werden kann, welches die Kanäle 46 durchströmt. Bei dem Verschmelzen des Kunststoffs des ersten Kunststoffrahmens 24 mit dem Kunststoff des zweiten Kunststoffrahmens 26 verschmelzen die Bereiche der Kunststoffe miteinander und verbinden sich, die aneinander anliegen. Daher erfolgt auch ein Verschmelzen der Stege 32 des Kunststoffrahmens 24 mit den entsprechend gegenüberliegenden Stegen 32 des Kunststoffrahmens 26.

Über die Mulden 28, welche im zusammengefügten Zustand des ersten und zweiten Rahmenteils 12, 14 Öffnungen bzw. wiederum kleine Kanäle bilden, kann ein Fluid von dem Versorgungskanal 44 über die durch die Mulden 28 gebildeten Öffnungen und über die Kanäle 46 sowie über die gegenüberliegenden, durch die Mulden 28 gebildeten Öffnungen zu dem gegenüberliegenden Versorgungskanal 44 fließen, wobei das Fluid über die Anschlüsse 38 und 40 zu- und weitergeführt wird.

Wie den Figuren 4 und 5 entnommen werden kann, sind die Anschlüsse 38 und 40 versetzt zueinander angeordnet. Dadurch erfolgt ein Durchströmen des Wärmetauschers 10 in Abhängigkeit der Zuführung eines Fluids von "oben" nach "unten" oder von "unten" nach "oben", wobei eine gleichmäßige Verteilung über die Kanäle 46 erfolgt.

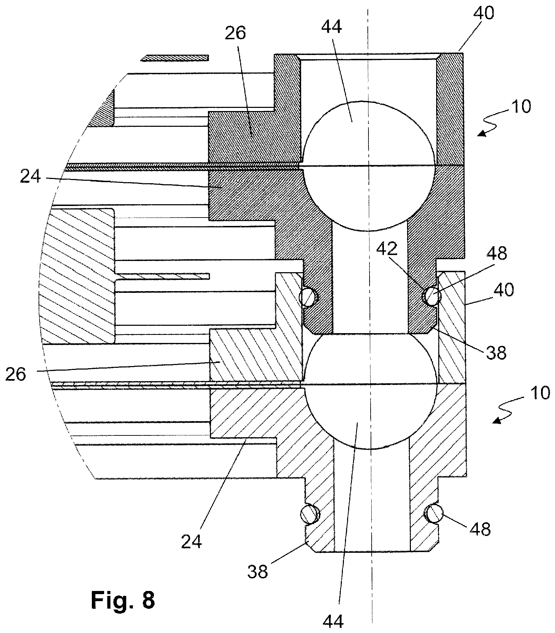

In Fig. 6 sind ferner die Anschlüsse 38 und 40 dargestellt, wobei der Anschluss 38 einen Dichtungsring 48 aufweist, der in einer entsprechend ausgebildeten Einkerbung 42 (Fig. 8) aufgenommen ist. Die Anschlüsse 38 und 40 sind so ausgebildet, dass der Anschluss 38 des ersten Rahmenteils 12 in den Anschluss 40 des zweiten Rahmenteils 14 eingesetzt werden kann. Dadurch ist eine stapelweise Anordnung von Wärmetauschern 10 nebeneinander möglich, ohne dass die Wärmetauscher gesonderte Zuführungsleitungen oder Anordnungen für die Zufuhr und Abfuhr eines Fluids benötigen, welche vor allem weitere Mittel benötigen oder aus dem Verbund von außen hervorstehen. Die Anschlüsse 38 und 40 stehen um ein bestimmtes Maß von dem Wärmetauscher 10 ab. Dies resultiert in einer gewissen räumlichen Distanz zweier nebeneinander angeordneter Wärmetauscher 10. Der dadurch entstandene Raum dient zur Aufnahme von Akkumulatorzellen 50 oder Wandlerzellen. Die Ausgestaltung der Anschlüsse 38 und 40 kann sich jedoch auch von der in den Figuren gezeigten Ausführung unterscheiden. Die Ausgestaltung hat immer nach Maßgabe der aufzunehmenden Akkumulatorzellen 50 oder Wandlerzellen sowie der restlichen Ausgestaltung der Wärmetauscher 10 zu erfolgen.

Fig. 7 zeigt eine teilweise geschnittene Ansicht eines plattenförmigen Wärmetauschers 10 im Bereich der Anschlüsse 38 und 40. Wie Fig. 7 deutlich entnommen werden kann, bilden die Profile 22 des ersten Wärmeleitelements 16 und des zweiten Wärmeleitelements 18 im zusammengefügten Zustand des ersten Rahmenteils 12 und des zweiten Rahmenteils 14 Kanäle 46 aus. Entsprechendes gilt für die Mulden 28 des ersten Kunststoffrahmens 24 des ersten Rahmenteils 12 und die Mulden 28 des zweiten Kunststoffrahmens 26 des zweiten Rahmenteils 14.

Ferner werden über die Versorgungskanalhälften 30 des ersten Rahmenteils 12 und des zweiten Rahmenteils 14 Versorgungskanäle 44 gebildet. Auf die Einkerbung 42 des Anschlusses 38 wird ein Dichtungsring 48 aufgesetzt, welcher verhindert, dass ein Fluid zur Kühlung im eingesetzten Zustand des Anschlusses 38 in einen Anschluss 40 austreten kann.

Fig. 8 zeigt eine Schnittansicht zweier verbundener plattenförmiger Wärmetauscher 10. Fig. 8 zeigt hierin deutlich, wie die Anordnung von Wärmetauschern 10 erfolgt. Der Anschluss 38 eines ersten Kunststoffrahmens 24 des ersten Rahmenteils 12 eines Wärmetauschers 10 ist dabei in den Anschluss 40 eines zweiten Kunststoffrahmens 26 des zweiten Rahmenteils 14 des weiteren Wärmetauschers 10 eingesetzt. Über den Dichtungsring 48 ist sichergestellt, dass kein Kühlmittel oder Fluid austreten kann. Zwischen den Wärmetauschern 10 ist eine Akkumulator- oder Wandlerzelle angeordnet, welche gekühlt werden soll.

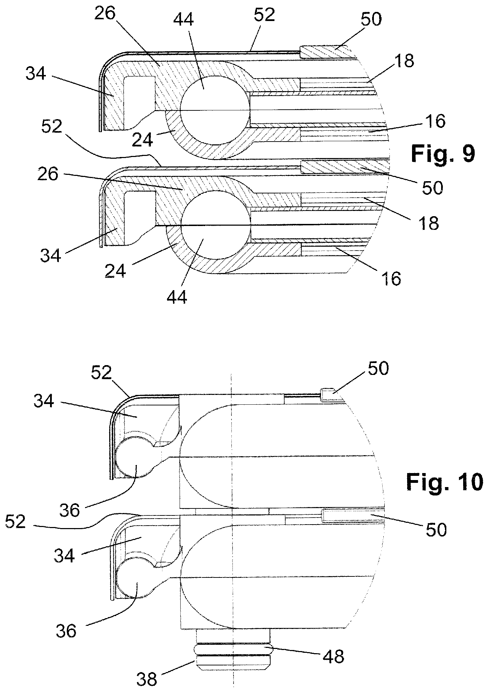

Fig. 9 zeigt eine Schnittansicht zweier plattenförmiger Wärmetauscher 10 und anliegenden Akkumulatorzellen 50 im Bereich der Kontakte 52. Die Kontakte 52 von Akkumulatorzellen 50 werden über die Auflagestege 34 aus dem Raum zwischen zwei Wärmetauschern 10 herausgeführt. Über die Ausgestaltung der Auflage 34 und dem Auflegen der Kontakte 52 wird eine relativ große Kontaktfläche bereitgestellt. Die Akkumulatorzellen 50 sind so zwischen den Wärmetauschern 10 angeordnet, dass diese zwischen dem ersten Wärmeleitelement 16 und dem zweiten Wärmeleitelement 18 anliegen. Wie in Fig. 9 dargestellt, können die ersten und zweiten Wärmeleitelementen 16, 18 auch so ausgebildet sein, dass außenseitig, d. h. den Akkumulatorzellen 50 zugewandt, weitere Schichten (wärmeleitend) aufgebracht sind oder aber das erste und zweite Wärmeleitelement 16 und 18 so ausgebildet sind, dass diese entsprechend dem Bereich des Wärmetauschers 10 im Bereich der Versorgungskanäle 44 genauso weit vorstehen und bündig mit diesen abschließen.

Fig. 10 zeigt eine weitere Ansicht zweier plattenförmiger Wärmetauscher 10 und anliegenden Akkumulatorzellen im Bereich der Kontakte 52. Hierbei ist die Anordnung der Aufnahmezapfen 36 sowie die Ausgestaltung des Anschlusses 38 mit Dichtungsring 48 vergrößert dargestellt. Ferner macht Fig. 10 deutlich, dass die Akkumulatorzellen 50 direkt an den Wärmetauschern 10 anliegen.

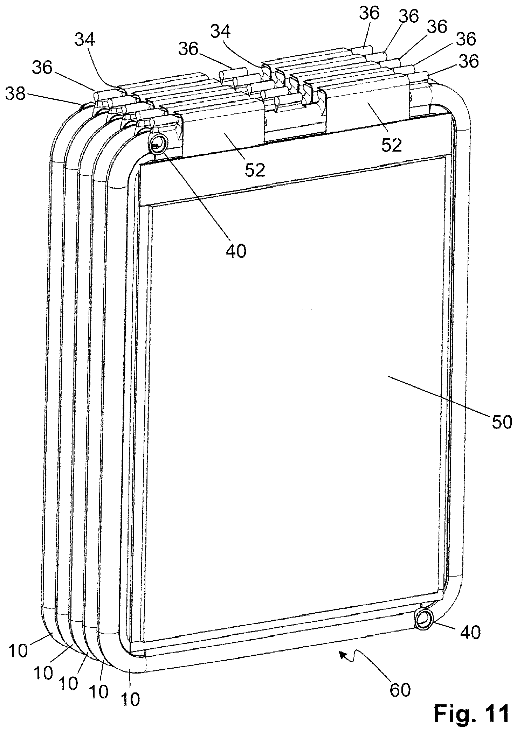

Fig. 11 zeigt einen Verbund 60 aus Akkumulatorzellen 50 und plattenförmigen Wärmetauschern 10. Auf Grund der Ausgestaltung der plattenförmigen Wärmetauscher 10, vor allem mit den Anschlüssen 40 und 38, ergibt sich eine platzsparende Anordnung. Ferner ist es ausreichend, ein Fluid zum Kühlen der Akkumulatorzellen 50 nur zu und von einem ersten Wärmetauscher 10 bzw. einem letzten Wärmetauscher 10 über Leitungen oder andere Einrichtungen dem Verbund 60 zuzuführen. Die Durchströmung der dazwischen angeordneten Wärmetauscher 10 erfolgt über die Verbindung der Anschlüsse 38 und 40. Die Kontakte 52 der Akkumulatorzellen 50 ragen aus dem Bereich zwischen zwei Wärmetauschern 10 hervor und werden über die Auflagestege 34 umgelegt und liegen auf diesen zur weiteren Kontaktierung auf. Ein derartiger Verbund 60 kann weitere Akkumulatorzellen 50 und Wärmetauscher 10 aufweisen. Die in Fig. 11 gewählte Darstellung ist nur beispielhaft und zeigt einen Ausschnitt aus einem Verbund 60 für beispielsweise Hochleistungsbatterien für Kraftfahrzeuge.

### Bezugszeichenliste

- 10: Wärmetauscher
- 12: erstes Rahmenteil
- 14: zweites Rahmenteil
- 16: erstes Wärmeleitelement
- 18: zweites Wärmeleitelement
- 20: Umfangskante
- 22: Profil
- 24: erster Kunststoffrahmen
- 26: zweiter Kunststoffrahmen
- 28: Mulde
- 30: Versorgungskanalhälfte
- 32: Steg
- 34: Auflagesteg
- 36: Aufnahmezapfen
- 38: Anschluss
- 40: Anschluss
- 42: Einkerbung
- 44: Versorgungskanal
- 46: Kanal
- 48: Dichtungsring
- 50: Akkumulatorzelle
- 52: Kontakt
- 60: Verbund

## Patentansprüche

1. Verfahren zur Herstellung eines plattenförmigen Wärmetauschers (10) für Akkumulatoren oder Wandler zur Stromerzeugung, umfassend die Schritte:
- Umspritzen eines ersten profilierten Wärmeleitelements (16) an dessen äußerem Umfang (20) mit einem Kunststoff zur Bildung eines ersten Rahmenteils (12), unter Bildung zweier Versorgungskanalhälften (30), von denen aus sich Mulden (28) zu dem profilierten Wärmeleitelement (16) erstrecken, und jeweils eines Anschlusses (38) für jede Versorgungskanalhälfte (30),
- Umspritzen eines zweiten profilierten Wärmeleitelements (18) an dessen äußerem Umfang (20) mit einem Kunststoff zur Bildung eines zweiten Rahmenteils (14), unter Bildung zweier Versorgungskanalhälften (30), von denen aus sich Mulden (28) zu dem profilierten Wärmeleitelement (18) erstrecken, und jeweils eines Anschlusses (40) für jede Versorgungskanalhälfte (30),
- Verbinden des ersten Rahmenteils (12) mit dem zweiten Rahmenteil (14), wobei das erste Rahmenteil (12) derart mit dem zweiten Rahmenteil (14) in Verbindung gebracht wird, dass die Profile (22) der profilierten Wärmeleitelemente (16, 18) einander zugewandt aneinander anliegen und die Versorgungskanalhälften (30) des ersten und des zweiten Rahmenteils (12, 14) Versorgungskanäle (44) und die Mulden (28) Öffnungen von den Versorgungskanälen (44) zu den durch die Profile (22) der profilierten Wärmeleitelemente (16, 18) gebildeten Kanäle (46) bilden,
wobei die Anschlüsse (38, 40) des ersten und des zweiten Rahmenteils (12, 14) so ausgebildet werden, dass die Anschlüsse (38) des ersten Rahmenteils (12) des Wärmetauschers (10) mit den Anschlüssen (40) eines zweiten Rahmenteils (14) eines weiteren Wärmetauschers (10) verbunden werden können.

2. Verfahren nach Anspruch 1, wobei das Verbinden des Kunststoffs des ersten Rahmenteils (12) mit dem Kunststoff des zweiten Rahmenteils (14) über Verschweißen erfolgt.

3. Verfahren nach Anspruch 1 oder 2, wobei das Verbinden der profilierten Wärmeleitelemente (16, 18) mittels wärmeprägender Verklebung erfolgt.

4. Verfahren nach Anspruch 2, wobei das Verschweißen mittels Heizplatten oder Infrarotstrahlungsschweißen erfolgt.

5. Plattenförmiger Wärmetauscher (10) für Akkumulatoren oder Wandler zur Stromerzeugung, herstellbar nach einem der Ansprüche 1 bis 4, bestehend aus zwei miteinander verbundenen Rahmenteilen (12, 14) aus Kunststoff, welche umlaufend jeweils ein profiliertes Wärmeleitelement (16, 18) umgeben und welche an dem äußeren Umfang (20) der profilierten Wärmeleitelemente (16, 18) mit den profilierten Wärmeleitelementen (16, 18) verbunden sind, wobei die Profile (22) der profilierten Wärmeleitelemente (16, 18) im verbundenen Zustand der Rahmenteile (12, 14) Kanäle (46) ausbilden, durch welche ein Fluid führbar ist, und wobei die Rahmenteile (12, 14) im verbundenen Zustand mindestens zwei Versorgungskanäle (44) für die Fluidzu- und/oder -abfuhr bilden, von denen aus sich Öffnungen zu den Kanälen (46) der profilierten Wärmeleitelemente (16, 18) erstrecken, wobei die Rahmenteile (12, 14) für jeden Versorgungskanal (44) jeweils mindestens einen Anschluss (38, 40) zur Fluidzu- und/oder -abfuhr aufweisen, der mit einem Anschluss (40, 38) eines Rahmenteils (14; 12) eines weiteren Wärmetauschers (10) verbindbar ist, wobei die Anschlüsse (38, 40) der Rahmenteile (12, 14) eines Wärmetauschers (10) so ausgebildet sind, dass die Anschlüsse (38) eines ersten Rahmenteils (12) des Wärmetauschers (10) mit den Anschlüssen (40) eines zweiten Rahmenteils (14) des weiteren Wärmetauschers (10) verbindbar sind.

6. Plattenförmiger Wärmetauscher (10) nach Anspruch 5, wobei der Anschluss (38) eines ersten Rahmenteils (12) in den Anschluss (40) eines zweiten Rahmenteils (14) einsetzbar ist.

7. Plattenförmiger Wärmetauscher (10) nach Anspruch 6, wobei der Anschluss (38) des ersten Rahmenteils (12) eine Einkerbung (42) aufweist, welche von einem Dichtungsring (48) umgeben ist.

8. Plattenförmiger Wärmetauscher (10) nach einem der Ansprüche 5 bis 7, wobei die Wärmeleitelemente (16, 18) aus Metall oder Graphit bestehen.

9. Plattenförmiger Wärmetauscher (10) nach Anspruch 5, wobei das erste oder das zweite Rahmenteil (12, 14) Auflagestege (34) für elektrische Kontakte (52) von Wandler- oder Akkumulatorzellen (52) aufweist.

10. Plattenförmiger Wärmetauscher (10) nach einem der Ansprüche 5 bis 9, wobei das erste oder das zweite Rahmenteil (12, 14) mindestens einen Aufnahmezapfen (36) aufweist.

11. Verbund (60), aufweisend eine Vielzahl von plattenförmigen Wärmetauschern (10) und Wandler- oder Akkumulatorzellen (50), wobei die Wandler- oder Akkumulatorzellen (50) stapelweise angeordnet und zwischen den Wandler- oder Akkumulatorzellen (50) jeweils ein plattenförmiger Wärmetauscher (10) nach einem der Ansprüche 5 bis 11 angeordnet ist, wobei die plattenförmigen Wärmetauscher (10) über die Anschlüsse (38, 40) miteinander verbunden und mit einer Einrichtung zur Zu- und Abfuhr von Fluid verbunden sind.

12. Verbund (60) nach Anspruch 11, wobei die Einrichtung zur Kühlung und zum Umwälzen des Fluids ausgebildet ist.

13. Verbund (60) nach Anspruch 11 oder 12, wobei die Wandler- oder Akkumulatorzellen (50) über eine Trenneinrichtung elektrisch miteinander verbunden sind.

14. Verbund (60) nach einem der Ansprüche 11 bis 13, wobei der Verbund (60) um mindestens einen plattenförmigen Wärmetauscher (10) und um mindestens eine Wandler- oder Akkumulatorzelle erweiterbar ist.

15. Verbund (60) nach einem der Ansprüche 11 bis 14, aufweisend eine Überwachungseinheit, die dazu ausgebildet ist, mindestens eine Zustandsüberwachung und/oder eine Temperaturüberwachung der Wandler- oder Akkumulatorzellen durchzuführen.

16. Verbund (60) nach Anspruch 15, aufweisend eine Trenneinrichtung, die in Abhängigkeit der von der Überwachungseinheit ermittelten Zustände mindestens eine Wandler- oder Akkumulatorzelle elektrisch trennt, wenn die Zustände vorgebbare Grenzen überschreiten.

17. Verbund (60) nach Anspruch 16, wobei die Trenneinrichtung eine pyrotechnisch arbeitende Einrichtung oder eine elektrisch, magnetisch oder mechanisch arbeitende Einrichtung ist.

## Claims

1. Method of producing a plate-shaped heat exchanger (10) for batteries or converters for power generation, comprising the steps of:
- injection-moulding a plastics material around a first profiled thermal conductor element (16) at the outer circumference (20) thereof so as to form a first frame part (12) while forming two supply channel halves (30), from which depressions (28) extend to the profiled thermal conductor element (16), and a respective connection (38) for each supply channel half (30),
- injection-moulding a plastics material around a second profiled thermal conductor element (18) at the outer circumference (20) thereof so as to form a second frame part (14) while forming two supply channel halves (30), from which depressions (28) extend to the profiled thermal conductor element (18), and a respective connection (40) for each supply channel half (30),
- connecting the first frame part (12) with the second frame part (14), wherein the first frame part (12) is brought into conjunction with the second frame part (14) in such a way that the profiles (22) of the profiled thermal conductor elements (16, 18) face towards and bear against one another and the supply channel halves (30) of the first and second frame parts (12, 14) form supply channels (44) and the depressions (28) form openings from the supply channels (44) to the channels (46) formed by the profiles (22) of the profiled thermal conductor elements (16, 18),
wherein the connections (38, 40) of the first and second frame parts (12, 14) are so constructed that the connections (38) of the first frame part (12) of the heat exchanger (10) can be connected with the connections (40) of a second frame part (14) of a further heat exchanger (10).

2. Method according to claim 1, wherein the connecting of the plastics material of the first frame part (12) with the plastics material of the second frame part (14) is carried out by way of welding.

3. Method according to claim 1 or 2, wherein the connecting of the profiled thermal conductor elements (16, 18) is carried out by means of adhesion under applied heat.

4. Method according to claim 2, wherein the welding is carried out by means of heating plates or infrared radiation welding.

5. Plate-shaped heat exchanger (10) for batteries or converters for power generation producible according to any one of claims 1 to 4, consisting of two interconnected frame parts (12, 14) of plastics material, which each surround a respective profiled thermal conductor element (16, 18) in encircling manner and which are connected with the profiled thermal conductor elements (16, 18) at the outer circumference (20) thereof, wherein the profiles (22) of the profiled thermal conductor elements (16, 18) in the connected state of the frame parts (12, 14) form channels (46) through which a fluid can be fed and wherein the frame parts (12, 14) in the connected state form at least two supply channels (44) for fluid feed and/or fluid discharge, from which openings extend to the channels (46) of the profiled thermal conductor elements (16, 18), wherein the frame parts (12, 14) each have for each supply channel (44) at least one connection (38, 40) for fluid feed and/or fluid discharge, which connection is connectible with a connection (40, 38) of a frame part (14; 12) of a further heat exchanger (10), wherein the connections (38, 40) of the frame parts (12, 14) of a heat exchanger (10) are so constructed that the connections (38) of a first frame part (12) of the heat exchanger (10) are connectible with the connections (40) of a second frame part (14) of the further heat exchanger (10).

6. Plate-shaped heat exchanger (10) according to claim 5, wherein the connection (38) of a first frame part (12) is insertable into the connection (40) of a second frame part (14).

7. Plate-shaped heat exchanger (10) according to claim 6, wherein the connection (38) of the first frame part (12) has a notch (42) surrounded by a sealing ring (48).

8. Plate-shaped heat exchanger (10) according to any one of claims 5 to 7, wherein the thermal conductor elements (16, 18) consist of metal or graphite.

9. Plate-shaped heat exchanger (10) according to claim 5, wherein the first or second frame part (12, 14) has support webs (34) for electrical contacts (52) of converter cells or battery cells (52).

10. Plate-shaped heat exchanger (10) according to any one of claims 5 to 9, wherein the first or second frame part (12, 14) has at least one mounting projection (36).

11. Assembly (60) comprising a plurality of plate-shaped heat exchangers (10) and converter or battery cells (50), wherein the converter or battery cells (50) are arranged in a stack and a respective plate-shaped heat exchanger (10) according to any one of claims 5 to 11 is arranged between the converter cells or battery cells (50), wherein the plate-shaped heat exchangers (10) are connected with one another by way of the connections (38, 40) and with a device for the feed and discharge of fluid.

12. Assembly (60) according to claim 11, wherein the device is constructed for cooling and circulating the fluid.

13. Assembly (60) according to claim 11 or 12, wherein the converter cells or battery cells (50) are electrically connected together by way of an isolating device.

14. Assembly (60) according to any one of claims 11 to 13, wherein the assembly (60) can be extended by at least one plate-shaped heat exchanger (10) and by at least one converter cell or battery cell.

15. Assembly (60) according to any one of claims 11 to 14, comprising a monitoring unit which is constructed for the purpose of carrying out at least monitoring of state and/or monitoring of temperature of the converter cells or battery cells.

16. Assembly (60) according to claim 15, comprising an isolating device which depending on the states determined by the monitoring unit electrically isolates at least one converter cell or battery cell if the states exceed predeterminable limits.

17. Assembly (60) according to claim 16, wherein the isolating device is a pyrotechnically operating device or an electrically, magnetically or mechanically operating device.

## Revendications

1. Procédé de fabrication d'un échangeur de chaleur (10) en forme de plaque pour des accumulateurs ou des convertisseurs destiné à la production d'électricité, comprenant les étapes suivantes :
- surmouler un premier élément thermoconducteur (16) profilé au niveau de la circonférence extérieure (20) de celui-ci avec une matière plastique en vue de former une première partie de cadre (12), en formant deux moitiés de conduite d'alimentation (30) depuis lesquelles des renfoncements (28) s'étendent jusqu'à l'élément thermoconducteur (16) profilé, et respectivement un raccord (38) pour chaque moitié de conduite d'alimentation (30),
- surmouler un second élément thermoconducteur (18) profilé au niveau de la circonférence extérieure (20) de celui-ci avec une matière plastique en vue de former une seconde partie de cadre (14), en formant deux moitiés de conduite d'alimentation (30) depuis lesquelles des renfoncements (28) s'étendent jusqu'à l'élément thermoconducteur (18) profilé, et respectivement un raccord (40) pour chaque moitié de conduite d'alimentation (30),
- assembler la première partie de cadre (12) à la seconde partie de cadre (14), dans lequel la première partie de cadre (12) est amenée à être assemblée à la seconde partie de cadre (14), de telle sorte que les profilés (22) des éléments thermoconducteurs (16, 18) profilés soient mutuellement disposés pour être tournés l'un vers l'autre et que les moitiés de conduite d'alimentation (30) de la première et de la seconde parties de cadre (12, 14) forment des conduites d'alimentation (44) et les renfoncements (28) forment des ouvertures depuis les conduites d'alimentation (44) vers les conduites (46) formées par les profilés (22) des éléments thermoconducteurs (16, 18) profilés,
dans lequel les raccords (38, 40) de la première et de la seconde parties de cadre (12, 14) sont formés de telle sorte que les raccords (38) de la première partie de cadre (12) de l'échangeur de chaleur (10) puissent être assemblés aux raccords (40) d'une seconde partie de cadre (14) d'un échangeur de chaleur (10) suivant.

2. Procédé selon la revendication 1, dans lequel l'assemblage de la matière plastique de la première partie de cadre (12) à la matière plastique de la seconde partie de cadre (14) est réalisé par soudure.

3. Procédé selon la revendication 1 ou 2, dans lequel l'assemblage des éléments thermoconducteurs (16, 18) profilés est réalisé au moyen d'un collage par gaufrage à chaud.

4. Procédé selon la revendication 2, dans lequel la soudure est réalisée au moyen de plaques chauffantes ou d'un soudage à rayonnement infrarouge.

5. Échangeur de chaleur (10) en forme de plaque pour des accumulateurs ou des convertisseurs destiné à la production d'électricité, pouvant être fabriqué selon l'une quelconque des revendications 1 à 4, comprenant deux parties de cadre (12, 14) en matière plastique assemblées l'une à l'autre, lesquelles entourent circonférentiellement respectivement un élément thermoconducteur (16, 18) profilé et lesquelles sont assemblées aux éléments thermoconducteurs (16, 18) profilés au niveau de la circonférence extérieure (20) des éléments thermoconducteurs (16, 18) profilés, dans lequel les profilés (22) des éléments thermoconducteurs (16, 18) profilés forment, dans l'état d'assemblage des parties de cadre (12, 14), des conduites (46) à travers lesquelles un fluide peut être acheminé, et dans lequel les parties de cadre (12, 14) dans l'état d'assemblage forment au moins deux conduites d'alimentation (44) pour l'introduction et/ou l'évacuation du fluide, depuis lesquelles des ouvertures s'étendent vers les conduites (46) des éléments thermoconducteurs (16, 18) profilés, dans lequel les parties de cadre (12, 14) présentent pour chaque conduite d'alimentation (44) respectivement au moins un raccord (38, 40) pour l'introduction et/ou l'évacuation du fluide, qui peut être assemblé à un raccord (40, 38) d'une partie de cadre (14 ; 12) d'un échangeur de chaleur (10) suivant, dans lequel les raccords (38, 40) des parties de cadre (12, 14) d'un échangeur de chaleur (10) sont formés de telle sorte que les raccords (38) d'une première partie de cadre (12) de l'échangeur de chaleur (10) puissent être assemblés aux raccords (40) d'une seconde partie de cadre (14) de l'échangeur de chaleur (10) suivant.

6. Échangeur de chaleur (10) en forme de plaque selon la revendication 5, dans lequel le raccord (38) d'une première partie de cadre (12) peut être inséré dans le raccord (40) d'une seconde partie de cadre (14).

7. Échangeur de chaleur (10) en forme de plaque selon la revendication 6, dans lequel le raccord (38) de la première partie de cadre (12) présente une entaille (42), laquelle est entourée d'une bague d'étanchéité (48).

8. Échangeur de chaleur (10) en forme de plaque selon l'une quelconque des revendications 5 à 7, dans lequel les éléments thermoconducteurs (16, 18) se composent de métal ou de graphite.

9. Échangeur de chaleur (10) en forme de plaque selon la revendication 5, dans lequel la première ou la seconde partie de cadre (12, 14) présente des nervures d'appui (34) pour des contacts électriques (52) de cellules de convertisseur ou d'accumulateur (52).

10. Échangeur de chaleur (10) en forme de plaque selon l'une quelconque des revendications 5 à 9, dans lequel la première ou la seconde partie de cadre (12, 14) présente au moins une broche de réception (36).

11. Assemblage (60), présentant une pluralité d'échangeurs de chaleur (10) en forme de plaque et de cellules de convertisseur ou d'accumulateur (50), dans lequel les cellules de convertisseur ou d'accumulateur (50) sont agencées par empilement et un échangeur de chaleur (10) en forme de plaque selon l'une quelconque des revendications 5 à 11 est respectivement agencé entre les cellules de convertisseur ou d'accumulateur (50), dans lequel les échangeurs de chaleur (10) en forme de plaque sont assemblés les uns aux autres via des raccords (38, 40) et sont assemblés à un dispositif dédié à l'introduction et à l'évacuation de fluide.

12. Assemblage (60) selon la revendication 11, dans lequel est formé le dispositif dédié au refroidissement et à la circulation du fluide.

13. Assemblage (60) selon la revendication 11 ou 12, dans lequel les cellules de convertisseur ou d'accumulateur (50) sont assemblées les unes aux autres électriquement via un dispositif de séparation.

14. Assemblage (60) selon l'une quelconque des revendications 11 à 13, dans lequel l'assemblage (60) peut être élargi d'au moins un échangeur de chaleur (10) en forme de plaque et d'au moins une cellule de convertisseur ou d'accumulateur.

15. Assemblage (60) selon l'une quelconque des revendications 11 à 14, présentant une unité de surveillance qui est formée pour réaliser au moins une surveillance d'état et/ou une surveillance de température des cellules de convertisseur ou d'accumulateur.

16. Assemblage (60) selon la revendication 15, présentant un dispositif de séparation qui, en fonction des états déterminés par l'unité de surveillance, sépare électriquement au moins une cellule de convertisseur ou d'accumulateur lorsque les états dépassent des limites pouvant être prédéfinies.

17. Assemblage (60) selon la revendication 16, dans lequel le dispositif de séparation est un dispositif fonctionnant de façon pyrotechnique ou un dispositif fonctionnant de façon électrique, magnétique ou mécanique.
